# EUROPÄISCHE PATENTSCHRIFT

(11) **EP 0 976 473 B1**
(45) Veröffentlichungstag und Bekanntmachung des Hinweises auf die Patenterteilung: **28.01.2004**
(21) Anmeldenummer: 99113885.0
(22) Anmeldetag: 16.07.1999
(51) Int. Cl.: B21J 15/10, B23P 19/04, B23Q 1/01

(54) **Nietvorrichtung zum Herstellen eines tonnenförmigen Bauteils, vorzugsweise eines Flugzeugrumpfes**
Riveting apparatus for the manufacture of a barrel-shaped workpiece, preferably an aircraft fuselage
Appareil de rivetage pour la fabrication d'une pièce en forme de tonneau, notamment un fuselage d'avion

(30) Priorität: 31.07.1998 DE 19834702
(43) Veröffentlichungstag der Anmeldung: 02.02.2000
(73) Patentinhaber: Airbus Deutschland GmbH, 21129 Hamburg (DE)
(72) Erfinder: Stoewer,Udo,Dipl.-Ing., 28355 Bremen (DE); Köhler,Bernd,Dipl.Ing., 21629 Neu Wulmstorf (DE); Kosuch,Norbert,Dr., 21224 Rosengarten-Sottorf (DE)
(74) Vertreter: Hansmann, Dierk, Dipl.-Ing.

(56) Entgegenhaltungen:
- DE-A- 19 545 672
- DE-A- 19 745 145
- FR-A- 2 722 437
- US-A- 4 662 556
- US-A- 5 154 643
- US-A- 5 661 892

## Beschreibung

Die Erfindung betrifft eine Nietvorrichtung zum Herstellen eines tonnenförmigen Bauteils, vorzugsweise eines Flugzeugrumpfes, aus großflächigen Bauteilen.

Für das Verbinden von großflächigen Bauteilen sind maschinelle Nietvorrichtungen bekannt, die zum Fertigen von Flugzeugrumpfschalen geeignet sind.
So zeigt die DE 35 35 761 C1 einen Nietautomaten mit dem großflächige, gekrümmte Werkstücke bearbeitet werden können. Der Nietautomat besteht aus einem Rahmenkörper, in dem ein Werkstück entlang der x-Achse verschiebbar gehaltert ist. Zwei, für die Durchführung der Nietung zusammenwirkende Nietsysteme, sind jeweils an einem in z-Richtung verfahrbaren Nietpositionierrahmen angeordnet, in y-Richtung positionierbar und um die x-Achse schwenkbar. Während ein Nietsystem eine Nieteinrichtung zum Bohren, Senken, Nietzuführen und Gegenhalten aufweist, verfügt das andere Nietsystem über eine Druckhülse, Döpper und einen Gegenhalter zum Herstellen des Schließkopfes vom entsprechenden Niet. Zur Durchführung der Nietung werden die beiden Nietsysteme rechnergestützt auf die entsprechende Nietstelle positioniert und rechnergestützt der Arbeitsablauf koordiniert.

Nachteilig bei diesem Nietautomaten ist, daß aufgrund der großen Baumaße nur ein begrenztes Einsatzgebiet vorhanden ist. Auch sind die Nietsysteme nicht in allen Raumachsen individuell verfahrbar und so können nur bestimmte Nietverbindungen hergestellt werden. Ein weiterer Nachteil ist, daß die Werkstücke, beispielsweise Rumpfschalen, bei ihrer Bearbeitung in einer x-Achse verschoben werden müssen, wofür für eine präzise Positionierung eine schwere Haltekonstruktion benötigt wird.
Aus DE 37 15 927 ist eine weitere Nietvorrichtung bekannt, die zum Herstellen einer Nietverbindung bei großflächigen Bauteilen geeignet ist. Diese Nietvorrichtung besteht aus zwei mechanisch getrennten Vorrichtungsteilen, d.h. je ein Vorrichtungsteil auf der Setzkopf- und der Schließkopfseite. Jedes Vorrichtungsteil besteht im wesentlichen aus einer Maschinenführung, die eine Werkzeugeinheit trägt. Die Positionierung und die Arbeitsabläufe zum Herstellen, Vorbereiten und Bestücken der Nietlöcher sowie zum Nieten werden von einem Computer gesteuert.
Bei dieser Nietvorrichtung sind Maschinenführungen beidseitig der zu verbindenden, in einem Traggerüst fixierten Bauteile vorgesehen, um ein Heranführen der Werkzeugeinheit an die Nietstellen zu realisieren. Das Anordnen der Maschinenführung insbesondere im Bereich innerhalb eines Flugzeugrumpfes zum Herstellen einer Längs- und/oder Quernaht ist aber an einigen Nietstellen sehr aufwendig bzw. nicht möglich, da der Innenbereich der Rumpfschalen unter anderem Spante, Stringer und Stützstangen aufweist und diese Hindernisse umfahren werden müssen oder die Zugänglichkeit zu den Nietstellen gar nicht gegeben ist.

Aus US-A-5 661 892 ist ein Halbtonnenmontageautomat bekannt, der zur Rumpfmontage eines Flugzeugrumpfes mit einer aus einem inneren und einem äußeren Teil bestehenden Nietvorrichtung vorgesehen ist. Eine derartige Maschine kann nur die Hälfte eines tonnenförmigen Bauteils im selben Arbeitsgang bearbeiten und so sind aufwändige Umsetzvorgänge während des Montageprozesses notwendig. Desweiteren ist es vorgesehen, den inneren Teil der Nietvorrichtung am Bauteil selbst abzustützen, d.h. es sind Strukturelemente des Flugzeugrumpfes wie Sitzschienen am Flugzeugboden notwendig, die das Gewicht sowie auch die erheblichen Bearbeitungskräfte aufnehmen können, ohne dass es zu Verformungen und Verschiebungen und daraus resultierende Fertigungsungenauigkeiten kommt.

Der Erfindung liegt daher die Aufgabe zugrunde, eine Vorrichtung der eingangs genannten Art zu schaffen, die eine flexible Positionierung der Werkzeugeinheiten am Bauteil ermöglicht und insbesondere an schwer zugängliche Nietstellen, die aufgrund von Verstärkungs- oder Ausrüstungsteilen wie Stringer, Spante oder Streben im Innenbereich des tonnenförmigen Bauteils entstehen, automatisch eine Nietung erfolgen kann.

Diese Aufgabe wird bei einer gattungsgemäßen Vorrichtung mit den im Patentanspruch 1 genannten Maßnahmen gelöst.

Dabei ist insbesondere von Vorteil, daß eine wirtschaftliche Nietfertigung von großflächigen, gekrümmten Bauteilen zu einem Flugzeugrumpf erreicht werden kann, die auch an schwer zugänglichen Nietstellen automatisch realisiert wird.

Weiterbildungen und vorteilhafte Ausgestaltungen sind in den Unteransprüchen 2 bis 8 angegeben.

In der Zeichnung ist ein Ausführungsbeispiel der Erfindung dargestellt, welches nachstehend anhand der Figuren 1 bis 3 näher beschrieben wird. In den Figuren sind gleiche Bauteile mit gleichen Bezugszeichen versehen.

Es zeigt
- Fig. 1: ein Nietmaschinensystem als äußerer Teil einer Nietvorrichtung zum Herstellen einer Quernaht und Teil einer Längsnaht an einer Rumpfsektion eines Flugzeuges in perspektivischer Darstellung,
- Fig. 2: ein Haltegestell mit Nietroboter als innerer Teil der Nietvorrichtung in einer Seitenansicht und
- Fig. 3: der äußere Teil der Nietvorrichtung in einer Vorderansicht.

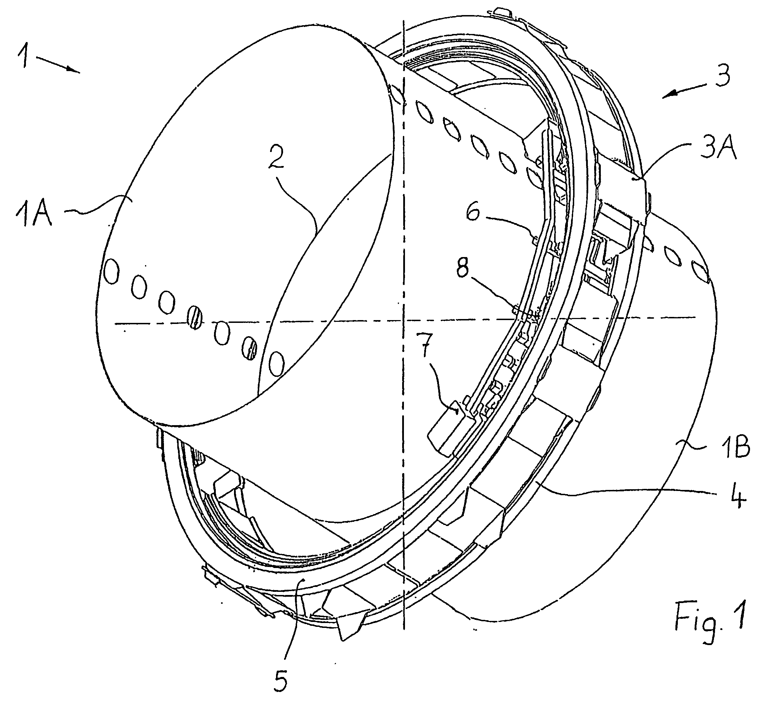

In Fig. 1 sind Rumpfsektionen 1A und 1 B als Teil eines Flugzeugrumpfes 1 ersichtlich. Eine Verbindung der Rumpfsektionen 1 A und 1 B wird durch das Vernieten erreicht, eine solche Verbindungsstelle wird im Flugzeug üblicherweise als Quernaht 2 bezeichnet. Für das Herstellen der Nietverbindungen bei der Montage des Flugzeugrumpfes 1 werden vorteilhaft automatische Nietvorrichtungen eingesetzt, da aufgrund der Vielzahl der Nietverbindungen nur mit einem automatisierten Verfahren eine wirtschaftliche Fertigung möglich ist. Ersichtlich ist in der Fig. 1 der äußere Teil 3A einer Nietvorrichtung 3, der ein Nietmaschinensystem 8 auf einer Maschinenführung 4 aufweist. Die Maschinenführung 4 ist ringförmig um das tonnenförmige Bauteil - den Flugzeugrumpf 1 - angeordnet und ist in Flugzeuglängsrichtung (x-Achse) verschiebbar. Sie besteht aus ringförmigen Führungsbahnen 5 und 6, auf denen mindestens ein verfahrbarer Schlitten 7 verläuft. Das Nietmaschinensystem 8 ist auf dem verfahrbaren Schlitten 7 angeordnet. Das Nietmaschinensystem 8 realisiert das Herstellen, Vorbereiten und Bestücken der Nietlöcher und das Herstellen der Nietverbindung. Dafür notwendige Einheiten sind beispielsweise aus DE 32 32 093 bekannt. Solche Einheiten, wie Bohreinheit, Nietfördereinheit und Nietinjektor (nicht gezeigt), bilden das Nietmaschinensystem 8. Die Nietpositionen können durch das Nietmaschinensystem 8 rechnergestützt angefahren werden.

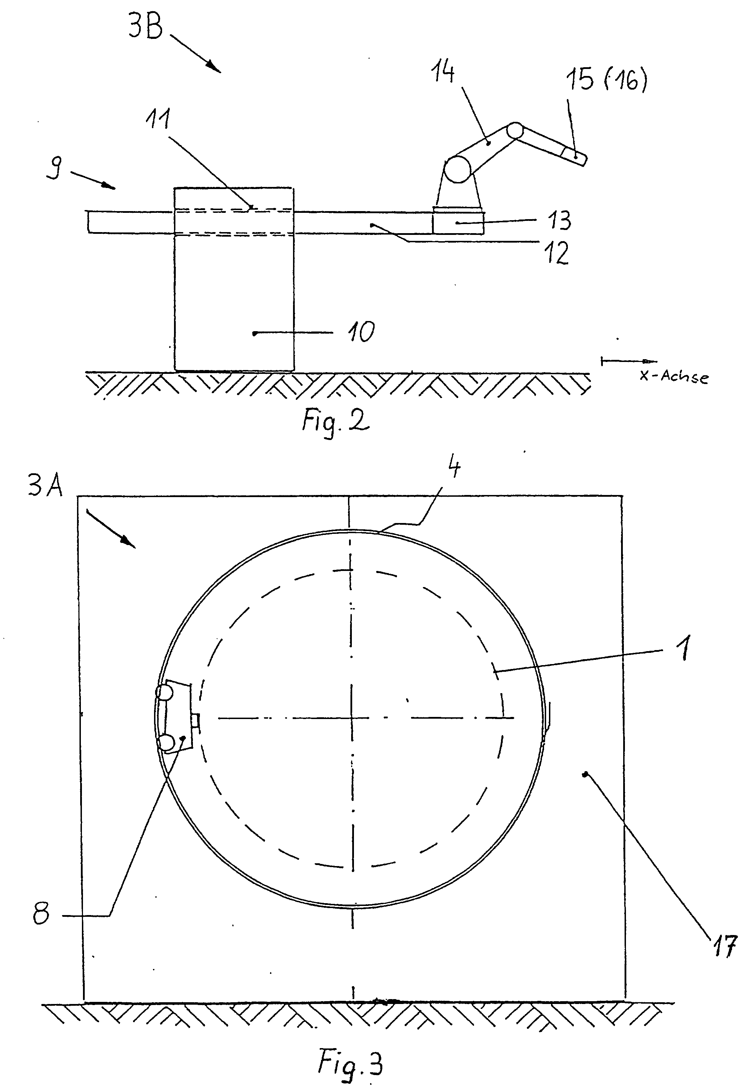

Zum Herstellen der Nietverbindung ist ein innerer Teil 3B der Nietvorrichtung 3 notwendig, der bei einteiligen Verbindungselementen die Funktion des Gegenhalters oder bei mehrteiligen Verbindungselementen das Zuführen und Setzen des zweiten Verbindungselementes, beispielsweise eines Schließringes, realisiert. Dieser Teil 3B der Nietvorrichtung 3 ist in der Fig. 2 gezeigt. Der innere Teil 3B der Nietvorrichtung 3 weist ein in Flugzeuglängsrichtung verfahrbares Haltegestell 9 auf. An diesem Haltegestell 9 ist ein mehrachsig gesteuerter Nietroboter 14 angeordnet, der jede Arbeitsposition innerhalb des Flugzeugrumpfes 1 ansteuern kann. Das Haltegestell 9 besteht in der gezeigten Ausführung aus einem Tragarmständer 10, in dem in einer Tragarmführung 11 ein Tragarm 12 in Flugzeuglängsrichtung verfahrbar ist. Der Tragarm 12 oder zumindest das Tragarmende 13 ist um die x-Achse (Flugzeuglängsachse) drehbar. Am Tragarmende 13 ist der Nietroboter 14 angeordnet. Der Nietroboter 14 besteht aus mehreren Gliedern und weist am Endglied einen Werkzeugkopf 15 auf, der das entsprechende Werkzeug bzw. die entsprechende Arbeitseinheit enthält bzw. tragen kann. So ist es möglich, das als Werkzeug ein rückschlaggedämpfter Gegenhalter eingesetzt wird, der bei einteiligen Verbindungselementen die zur Herstellung der Nietverbindung notwendige Gegenhaltekraft aufbringt oder bei zweiteiligen Verbindungselementen der Werkzeugkopf ein Schließkopfwerkzeug zur Schließringzuführung und zum Schließringsetzen trägt, wie beispielsweise aus DE 37 15 927 bekannt ist. Der Tragarm 12 mit dem daran angeordneten Roboter 14 können zusammenwirkend rechnergesteuert jeden beliebigen Punkt am Bauteil 1 ansteuern und bestimmte Konturen, wie beispielsweise die im Flugzeugrumpf üblichen Stringer, Spante, Fußböden und Stützstangen umfahren. Der Tragarmständer 10 ist auf einer Schienenführung außerhalb des Flugzeugrumpfes 1 verfahrbar.

In der Fig. 3 ist der äußere Teil 3A der Nietvorrichtung 3 - auch Orbitalnietsystem genannt - schematisch in einer Vorderansicht gezeigt. Wie schon in der Fig. 1 ersichtlich und beschrieben, kann die Nietmaschine 8 über die ringförmig um den Flugzeugrumpf 1 angeordnete Führung 4 verfahren werden und die entsprechende Nietstelle erreichen. Somit kann insbesondere die Quernaht eines Flugzeuges und ein Längsnahtanteil im Fertigungsprozeß eines Flugzeugrumpfes gefertigt werden. In Flugzeuglängsrichtung wird das Orbitalnietsystem über einen verfahrbaren Ständer 17 positioniert.

Der innere und äußere Teil 3A und 3B der Nietvorrichtung 3 wirken über Rechnereinheiten miteinander so zusammen, daß ein Ansteuern der Nietstelle und die Arbeitsabläufe zur Herstellung einer Nietverbindung zeitlich und räumlich abgestimmt sind und eine automatische Flugzeugrumpfmontage damit realisierbar ist. Außen um den Flugzeugrumpf 1 herum arbeitet das Orbitalnietsystem, bohrt mittels der Bohreinheit die Nietlöcher, bringt mittels der Dichtmittelzuführeinheit Dichtmasse an die Bohrung, sucht rechnergesteuert den Niet aus dem Nietbehälter und führt den Niet in die Bohrung mittels der Nietzuführeinheit. Der rechnergesteuerte Nietroboter 14 auf dem Haltegestell 9 klemmt die Bauteile während des Bohrvorganges, führt bei einem zweiteiligen Verbindungselement den Schließring auf den eingesteckten Niet und verformt den Schließring. Nach erfolgter Nietung verfahren beide Teile 3A und 3B der Nietvorrichtung 3 zum nächsten programmierten Nietort und der Programmablauf zur Herstellung der Verbindung wird erneut automatisch gestartet.

### Bezugszeichenliste

- 1 -: Flugzeugrumpf
- 2 -: Quernaht
- 3 -: Nietvorrichtung
- 3A -: äußerer Teil der Nietvorrichtung
- 3B -: innerer Teil der Nietvorrichtung
- 4 -: Maschinenführung
- 5 -: Führungsbahn 1
- 6 -: Führungsbahn 2
- 7 -: verfahrbarer Schlitten
- 8 -: Nietmaschinensystem
- 9 -: Haltegestell
- 10 -: Tragarmständer
- 11 -: Tragarmführung
- 12 -: Tragarm
- 13 -: Tragarmende
- 14 -: Nietroboter
- 15 -: Werkzeugkopf
- 16 -: Schließkopfwerkzeug (oder Gegenhalter)
- 17 -: verfahrbarer Ständer für Orbitalnietsystem

## Patentansprüche

1. Nietvorrichtung zum Herstellen eines tonnenförmigen Flugzeugrumpfes aus großflächigen Bauteilen (1A, 18) mit folgenden Merkmalen:
- die Nietvorrichtung (3) weist als äußeren Teil (3A) eine ringförmig um das tonnenförmige Bauteil (1) angeordnete und in Flugzeuglängsrichtung (x-Achse) verschiebbare Maschinenführung (4) auf,
- zumindest ein Nietmaschinensystem (8) mit Einrichtungen zum Herstellen, Vorbereiten und Bestücken der Nietlöcher und Durchführen des Nietens ist auf der Maschinenführung (4) angeordnet und zu den Nietstellen verfahrbar,
- die Nietpositionen des Nietmaschinensystems (8) sind rechnergestützt ansteuerbar,
- innerhalb des tonnenförmigen Bauteils (1) ist ein innerer Teil (3B) der Nietvorrichtung (3) vorgesehen, der ein in Flugzeuglängsrichtung verfahrbares Haltegestell (9) aufweist, an den ein mehrachsig gesteuerter Nietroboter (14) angeordnet ist und durch Zusammenwirken von Haltegestell (9) und Nietroboter (14) der Werkzeugkopf (15) des Nietroboters (14) rechnergestützt jede Arbeitsposition innerhalb des tonnenförmigen Bauteils (1) ansteuern kann, wobei die Abstützung des Haltegestells (9) außerhalb des Flugzeugrumpfes erfolgt, und
- eine Steuerungseinheit ist zur abgestimmten Positionierung vom inneren (3A) und äußeren (3B) Teil der Nietvorrichtung (3) an der Nietstelle und zur abgestimmten Steuerung des Arbeitsablaufs vorgesehen.

2. Nietvorrichtung nach Anspruch 1,
**dadurch gekennzeichnet, daß**
das Haltegestell (9) einen Tragarmständer (10) mit einer Tragarmführung (11) aufweist, wobei an der Tragarmführung (11) ein Tragarm (12) angeordnet ist, dessen Tragarmende (13) den Nietroboter (14) hält.

3. Nietvorrichtung nach Anspruch 2,
**dadurch gekennzeichnet, daß**
der Tragarm (12) in der Tragarmführung (11) in Flugzeuglängsrichtung verfahrbar ist.

4. Nietvorrichtung nach einem der Ansprüche 2 oder 3,
**dadurch gekennzeichnet, daß**
der Tragarm (12) in der Tragarmführung (11) um die Flugzeuglängsachse drehbar ist.

5. Nietvorrichtung nach einem der Ansprüche 2 oder 3,
**dadurch gekennzeichnet, daß**
der Tragarm (12) ein um die Flugzeuglängsachse drehbares Tragarmende (13) aufweist.

6. Nietvorrichtung nach einem der Ansprüche 1 bis 5
**dadurch gekennzeichnet, daß**
der Nietroboter (14) einen wechselbaren Werkzeugkopf (15) aufweist.

7. Nietvorrichtung nach einem der Ansprüche 1 bis 6
**dadurch gekennzeichnet, daß**
der Werkzeugkopf (15) ein Gegenhalterwerkzeug aufweist.

8. Nietvorrichtung nach einem der Ansprüche 1 bis 6
**dadurch gekennzeichnet, daß**
der Werkzeugkopf (15) ein Schließkopfwerkzeug aufweist.

## Claims

1. Riveting apparatus for manufacturing a barrel-shaped aircraft fuselage from large-surface components (1A, 1B) having the following features:
- the riveting apparatus (3) comprises, as outer part (3A), a machine guide (4) disposed in an annular manner around the barrel-shaped component (1) and displaceable in aircraft longitudinal direction (x-axis),
- at least one riveting machine system (8) having devices for producing, preparing and equipping the rivet holes and effecting the riveting is disposed on the machine guide (4) and movable to the riveting points,
- the riveting positions of the riveting machine system (8) are approachable in a computer-assisted manner,
- inside the barrel-shaped component (1) an inner part (3B) of the riveting apparatus (3) is provided, which comprises a holding frame (9) movable in aircraft longitudinal direction, on which a multi-axis controlled riveting robot (14) is disposed, and by virtue of the interaction of holding frame (9) and riveting robot (14) the tool head (15) of the riveting robot (14) may in a computer-assisted manner approach any working position inside the barrel-shaped component (1),
wherein support of the holding frame (9) is effected outside of the aircraft fuselage, and
- a control unit is provided for coordinated positioning of the inner (3A) and outer (3B) part of the riveting apparatus (3) at the riveting point and for coordinated control of the operating sequence.

2. Riveting apparatus according to claim 1,
**characterized in that**
the holding frame (9) comprises a bracket column (10) with a bracket guide (11), wherein disposed on the bracket guide (11) is a bracket (12), the bracket end (13) of which holds the riveting robot (14).

3. Riveting apparatus according to claim 2,
**characterized in that**
the bracket (12) is movable in aircraft longitudinal direction in the bracket guide (11).

4. Riveting apparatus according to one of claims 2 or 3,
**characterized in that**
the bracket (12) is rotatable about the aircraft longitudinal axis in the bracket guide (11).

5. Riveting apparatus according to one of claims 2 or 3,
**characterized in that**
the bracket (12) has a bracket end (13), which is rotatable about the aircraft longitudinal axis.

6. Riveting apparatus according to one of claims 1 to 5,
**characterized in that**
the riveting robot (14) has an exchangeable tool head (15).

7. Riveting apparatus according to one of claims 1 to 6,
**characterized in that**
the tool head (15) comprises an overarm tool.

8. Riveting apparatus according to one of claims 1 to 6,
**characterized in that**
the tool head (15) comprises a snap head tool.

## Revendications

1. Appareil de rivetage pour la fabrication d'un fuselage d'avion en forme de tonneau et constitué d'éléments holoédriques (1A, 1B) présentant les caractéristiques suivantes :
- l'appareil de rivetage (3) présente, comme partie externe (3A), un guidage de machine (4) disposé de façon circulaire autour de l' élément (1) en forme de tonneau et capable de coulisser dans la direction longitudinale de l'avion (axe x),
- au moins un système de riveteuses (8) avec installations pour la fabrication, la préparation et l'équipement des trous de rivetage et pour le rivetage a été disposé sur le guidage de machine (4) et peut coulisser en direction des points de rivetage,
- les positions de rivetage du système de riveteuses (8) peuvent être commandées avec assistance par ordinateur,
- une partie interne (3B) de l'appareil de rivetage (3) a été prévue à l' intérieur de la pièce (1) en forme de tonneau, cette partie présentant un berceau (9) capable de coulisser dans la direction longitudinale de l'avion et contre lequel un robot de rivetage (14) actionné sur plusieurs axes a été disposé et la tête de l'outil (15) du robot de rivetage (14) peut, grâce à la solidarité du berceau (9) et du robot de rivetage (14), commander chaque position de travail à l'intérieur de la pièce (1) en forme de tonneau, avec assistance par ordinateur, le support du berceau (9) étant soutenu à l'extérieur du fuselage d'avion et
- une unité de commande a été prévue pour le positionnement adapté de la partie interne (3A) et de la partie externe (3B) de l'appareil de rivetage (3) contre le point de rivetage ainsi que pour la commande adaptée du processus de travail.

2. Appareil de rivetage selon la revendication 1,
**caractérisé en ce que**
le berceau (9) présente un montant de bras porteur (10) avec guidage de bras porteur (11), un bras porteur (12) dont l'extrémité (13) porte le robot de rivetage (14) ayant été disposé contre le guidage du bras porteur (11).

3. Appareil de rivetage selon la revendication 2,
**caractérisé en ce que**
le bras porteur (12) peut coulisser dans le guidage du bras porteur (11), dans la direction longitudinale de l'avion.

4. Appareil de rivetage selon une des revendications 2 ou 3,
**caractérisé en ce que**
le bras porteur (12) peut pivoter dans le guidage du bras porteur (11), autour de l'axe longitudinal de l'avion.

5. Appareil de rivetage selon une des revendications 2 ou 3,
**caractérisé en ce que**
le bras porteur (12) présente une extrémité (13) capable de pivoter autour de l'axe longitudinal de l'avion.

6. Appareil de rivetage selon une des revendications 1 à 5,
**caractérisé en ce que**
le robot de rivetage (14) présente une tête d'outil (15) remplaçable.

7. Appareil de rivetage selon une des revendications 1 à 6,
**caractérisé en ce que**
la tête d'outil (15) présente un outil serre-pièce.

8. Appareil de rivetage selon une des revendications 1 à 6,
**caractérisé en ce que**
la tête d'outil (15) présente un outil à tête de fermeture.
